# EUROPEAN PATENT APPLICATION

(11) **EP 0 710 019 A2**
(43) Date of publication of application: **01.05.1996**
(21) Application number: 95117189.1
(22) Date of filing: 31.10.1995
(51) Int. Cl.: H04N 5/74

(54) **Digital micromirror display for television**

(30) Priority: 31.10.1994 US 332545
(71) Applicant: TEXAS INSTRUMENTS INCORPORATED, Dallas Texas 75265 (US)
(72) Inventor: Gove, Robert J., Los Gatos, CA 95030 (US); Markandey, Vishal, Dallas, Texas 75209 (US)
(74) Representative: Schwepfinger, Karl-Heinz, Dipl.-Ing.

(57) **Abstract**

A digital micromirror device (60) for displaying a wide television image comprising a 16:9 array of mirror elements suspended over a substrate, each mirror element having at least one address electrode formed on the substrate between the substrate and the mirror element. An array of memory cells (62) is formed on the substrate, each memory cell in communication with at least one address electrode. An array of input shift registers (64) in communication with the memory cells (62) is formed on the substrate for receiving a series of input image data words and for driving the image data to the memory cells (62). The digital micromirror device (60) enables the efficient reproduction of standard and wide-television images.

## Description

### FIELD OF THE INVENTION

This invention relates to the field of display systems, more particularly to digital micromirror spatial light modulators that are capable of displaying standard-format and wide-format television images.

### BACKGROUND OF THE INVENTION

Television broadcast systems convert an image into a stream of image data which is transmitted to multiple television receivers. The image data represents the intensity and color of the source image for each picture element, or pixel, and is typically broadcast in a raster format, one pixel after another from left to right across a row, one row after another from top to bottom. Typically the image data is interlaced, wherein sub-frames comprised of the even-numbered rows and sub-frames comprised of the odd-numbered rows are transmitted separately. A television receiver recreates the image from the transmitted data signal by modulating the light emitted by a pixel array.

Traditional television broadcast standards, such as NTSC, PAL, and SECAM broadcast an image that has an aspect ratio, the ratio of the width of an image to its height, of approximately 4:3. High-definition television (HDTV) standards are being developed that transmit a wider image and have a much greater resolution. As the television industry moves toward HDTV, interim broadcast standards are being developed that provide a resolution between that of HDTV and standard television, and a display aspect ratio of around 16:9. In order to display these wide television (wide-TV) formats, display systems capable of displaying wider images must be developed.

Typically, television display systems are capable of receiving only one broadcast format. In the past, this limitation has been acceptable to consumers because only one television broadcast format was available in each location and the television broadcast standards were well entrenched and expected to remain constant. With the impending arrival of wide-TV and HDTV, it is envisioned that not only will more than one broadcast standard be available to consumers, but that existing standards will gradually become obsolete as the newer standards evolve. Therefore, there will be a need for a multi-format television display system that is capable of displaying images transmitted by existing broadcast standards having a 4:3 aspect ratio and by future broadcast standards having a 16:9 aspect ratio.

### SUMMARY OF THE INVENTION

In accordance with the present invention, a digital micromirror device for displaying a wide television image comprises a 16:9 array of mirror elements suspended over a substrate, each mirror element having at least one address electrode formed on the substrate between the substrate and the mirror element. An array of memory cells is formed on the substrate, each in communication with at least one address electrode. An array of input shift registers in communication with the memory cells is formed on the substrate for receiving a series of input image data words and for driving the image data to the memory cells.

### BRIEF DESCRIPTION OF THE DRAWINGS

For a more complete understanding of the present invention, and the advantages thereof, reference is now made to the following descriptions taken in conjunction with the accompanying drawings, in which:
FIG. 1 is a perspective view of a portion of a hidden-hinge digital micromirror device array of the prior art;
FIG. 2 is a schematic view of a DMD-based image projection system according to the prior art;
FIG. 3 is schematic view of a DMD array according to the present invention;
FIG. 4 is a schematic view of a portion of the DMD array of Figure 3 showing the input shift register and memory cell interconnections;
FIG. 5 is a schematic view of a portion of the DMD array of Figure 3 showing interleaved mirror reset groups; and
FIG. 6 is a plan view of an array of DMD mirrors having a staggered format.

### DETAILED DESCRIPTION

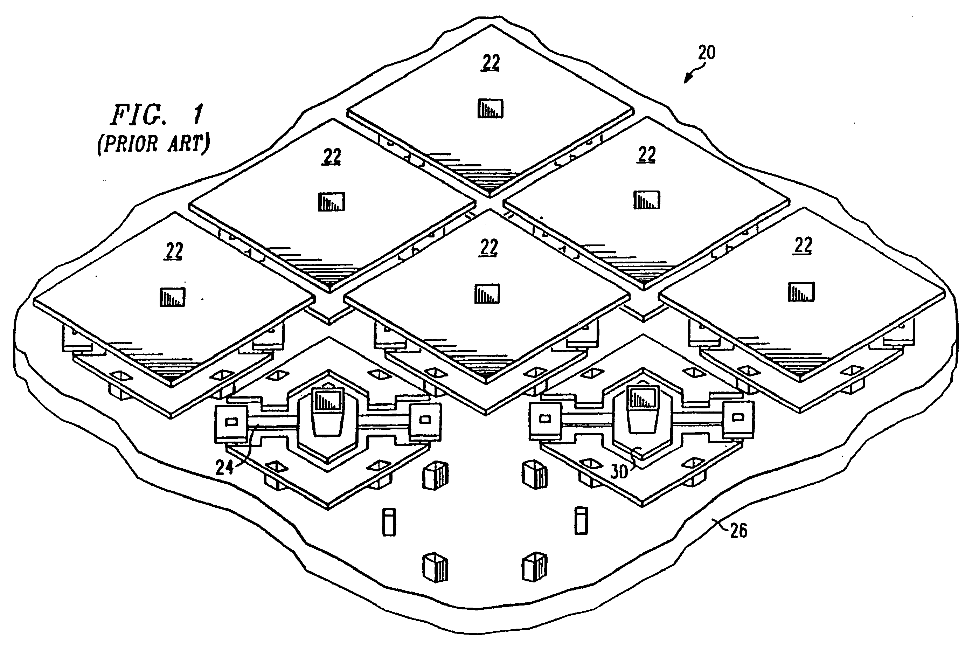

Digital micromirror devices (DMDs) of the prior art, shown in Figure 1 and taught in commonly assigned U.S. Patents 5,061,049, "Spatial Light Modulator and Method," issued October 29, 1991, and 5,083,857, "Multi-Level Deformable Mirror Device," issued January 28, 1992, and pending U.S. Patent Applications 08/161,832, "DMD Architecture to Improve Horizontal Resolution," filed December 3, 1993, and 08/171,303, "Multi-Level Digital Micromirror Device," filed December 21, 1993, are comprised of an array of mirrors 22. Each mirror 22 is supported by deformable torsion beams 24, or hinges, over a semiconductor substrate 26 which is typically silicon. On the surface of the substrate 26 are located address electrodes 28 which are in electrical connection with a memory cell fabricated in, or on, the substrate 26. Torsion hinge versions of the DMD 20, as shown in Figure 1, typically have an address electrode 28 fabricated on the substrate 26 on each side of the hinge 24 centerline. A mirror 22 and its associated hinges 24 and address electrodes 28 comprise a modulator element or cell.

In operation, an address voltage is applied to one of the address electrodes 28 thereby creating a voltage bias between the mirror 22 and the address electrode 28. The voltage bias causes an electrostatic attraction between the mirror 22 and the address electrode 28 which causes the mirror 22 to deflect or rotate toward the address electrode 28. A separate voltage bias is applied to the mirror 22 of torsion beam DMDs 20 after the address voltage has partially rotated the mirror 22. The mirror voltage bias is large enough to increase the electrostatic attractive force to the point where the mirror 22 has only two stable positions, fully rotated clockwise, and fully rotated counter-clockwise. When the mirror bias is applied, the mirror 22 rotates toward the closest address electrode 28 until it is mechanically stopped by contact between the tip of the landing yoke 30 and the substrate 26.

One of the benefits of bistable operation is that once the DMD mirror has been fully rotated, the address voltage may be removed or changed without causing the position of the mirror to change. This allows one memory cell to supply data to multiple modulator cells provided that each mirror connected to a given memory cell is independently biased. This mode of operation is called "split-reset because the repositioning, or resetting, of the mirrors 22 in the DMD array is divided, or split, into groups of cells. The mirrors 22 in each group have a common mirror bias signal which allows them to be reset independently of the mirrors 22 in other groups.

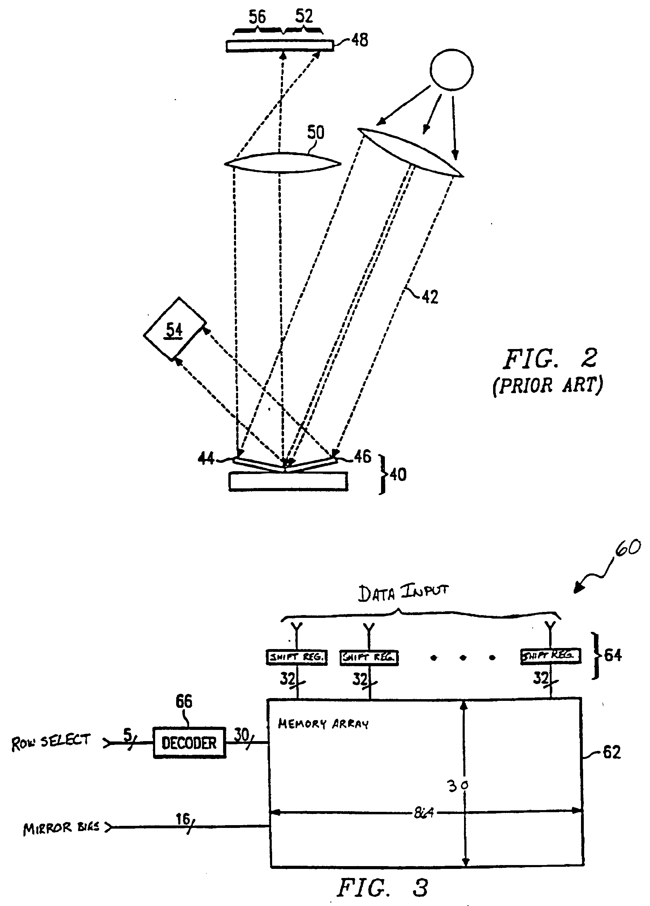

As shown schematically in Figure 2, bistable DMDs 40 are used to create images by reflecting light 42 from the surface of the mirror array to an image plane or projection screen 48. While a typical DMD may have several hundred thousand mirrors, for simplicity only 2 mirrors 44, 46 are shown in Figure 2. A mirror 44 rotated in a first direction ("on") reflects light toward a projection lens 50 which focuses the light on a projection screen 48 thereby creating a bright spot 52, or pixel, corresponding to the mirror 44. A mirror 46 rotated in the other direction ("off") reflects light toward a projection stop 54 or light absorption facility thereby causing a corresponding pixel 56 of the projected image to remain dark.

At least three wide-TV formats, wide-NTSC, wide-PAL, and wide-SECAM, have been proposed. Wide-PAL and wide-SECAM are European television standards specifying a television signal with a horizontal resolution of 1024 pixels and a vertical resolution of 576 rows. Wide-NTSC is an American television standard that transmits 853 pixels in each of 480 rows. Because of the different formats, a modulator designed to display an image in any of the three formats must either include elements that will not be used in all formats, or must rescale and resample to match the available elements to the number of elements required by the transmission standard.

In order to efficiently display images transmitted by the new wide television transmission standards, a new DMD architecture, shown in Figure 3, has been developed. This new DMD architecture allows an image transmitted by any of the three new wide-TV standards to be displayed with little or no resampling or scaling of the transmitted image data. A DMD 60 according to one embodiment of the present invention is comprised of an array of mirrors having 480 rows with 864 elements in each row. According to another embodiment of the present invention the DMD array is comprised of an array of 576 rows of 1024 elements. An array of memory cells 62 fabricated on the substrate beneath the mirror array supplies data to the address electrodes underneath each mirror.

To facilitate the transfer of data into the memory array of the DMD, an array of serial-in parallel-out input shift registers 64 is fabricated on the DMD substrate. The input shift registers 64 preferably have a total width equal to the width of the DMD array. Data for each row of the memory array is divided into groups, wherein the number of bits in each group is equal to the width of each shift register, and the bits within each group are clocked into the shift register array 64 sequentially. In the example shown in Figure 3, the 864 pixels in each row are divided into 27 groups of 32 bits each. This allows the entire 864 bits of data for one row to be loaded into the shift registers 64 in 32 27-bit words. If the DMD is used in a three-color TV system with 8-bits of data for each color and a frame rate of 60 Hz, the data rate required for each input signal is approximately 24 MHz. Another embodiment includes an array of 54 16-bit shift registers in lieu of the 27 32-bit shift register array described above.

After all of the data for an entire row is loaded into the shift registers 64, the data is loaded into a row of the memory array selected by an address decoder 66. In the example shown, there are 30 rows of memory cells, each row being 864 bits wide. After each row of the memory has been loaded with image data, one group of mirrors is reset or repositioned to represent the data in the memory array. The data loading process is then repeated for the remaining 15 groups of mirrors.

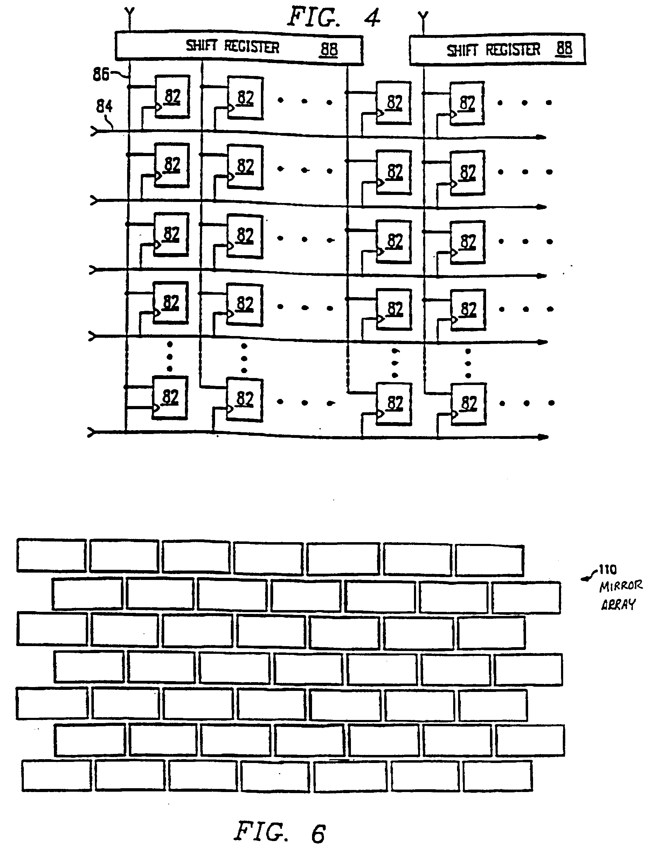

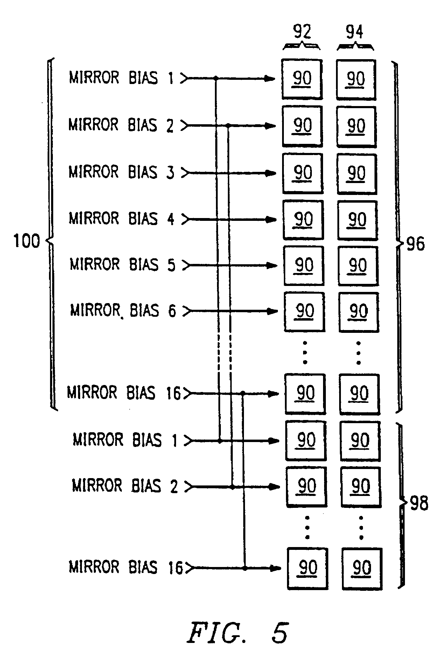

Figure 4 shows a portion of the shift registers 88 in the shift register array 64 of Figure 3 and a small portion of memory cells 82 that comprise the memory array 62 of Figure 3 that is fabricated underneath the mirror array. Each of the 864 memory cells 82 in a row is connected to a common clock or latch signal 84 which is driven by the address decoder 66. Each of the 30 memory cells 82 in a column shares a common data input 86 which is connected to one of the 32 parallel outputs of one of the shift registers 88 in array 64. The output of each of the memory cells drives the address electrodes for 16 mirrors.

Figure 5 shows the mirrors 90 controlled by four memory cells 82 of Figure 4. Each memory cell 82 controls a column 92, 94 of 16 mirrors 90 and a row of memory cells 82 controls 16 rows of mirrors 96, 98. The 16 mirror bias lines 100 each connect to one of the mirrors 90 controlled by each of the memory cells 82 forming 16 groups of mirrors 90 which may be independently reset.

Although the 16 reset groups are shown interleaved, it should be understood that other arrangements are possible with corresponding changes to the interconnections between the memory cells 82 and the address electrodes.

Each mirror 90 in the array is typically a square 17mm across; however, other mirror sizes and shapes, such as rectangular or hexagonal mirrors, may be used. Any type of DMD may be used, for example cantilever- or torsion-beam DMDs, but the preferred modulator element structure is the "Hidden-Hinge 2" architecture shown in Figure 1 and taught in commonly assigned U.S. Patent Application 08/171,303, "Multi-Level Digital Micromirror Device," filed December 21, 1993, (Texas Instruments, Inc., docket TI-18387). As taught in the above referenced patent application, the Hidden-Hinge 2 architecture provides a contrast ratio greater than 100:1 with excellent control of the angular rotation of each mirror element.

Images that are transmitted in the wide-NTSC format may be displayed by the 864x480 element array without any scaling. However, the image data is broadcast in an interlaced format and is typically converted to a progressive scan, or proscan, format before being displayed. Proscan conversion algorithms are taught in commonly assigned pending U.S. Patent Application 08/147,249, "Digital Television System," filed October 27, 1993, (Texas Instruments, Inc., docket TI-17855), which is hereby incorporated by reference. Because each row of the DMD array is 11 pixels larger than the 853 image pixels transmitted, the 11 extra pixels on each row may be used to align the projected image by shifting the image data right and left on each row up to 11 pixels.

In addition to a proscan algorithm used to deinterlace the image data, the European broadcast standards also require data scaling to reduce the 576 image data lines which are broadcast to the 480 rows of mirrors available for display. Commonly assigned, pending U.S. Patent Application 08/147,249 also teaches scaling algorithms. An alternative to the DMD array taught above includes 576 rows of mirrors. The 576-row array allows European television formats to be displayed without the loss of vertical resolution associated with scaling the images to 480 rows. To display images broadcast by either the wide-PAL or wide-SECAM formats, an array with an effective horizontal resolution of at least 1024 is required to prevent the loss of some of the transmitted image information and to maintain the desired 16:9 aspect ratio. An NTSC image may be displayed on the 1024x576 mirror array by horizontally resampling the data to 1024 pixels per row and vertically scaling the image to increase the number of rows from 480 to 576. However, the 1024x576 mirror array contains more mirrors than the 864x480 array, thereby raising the cost of the mirror array.

In order to minimize the number of mirrors required to display a wide European television broadcast, and therefore minimize the cost of the mirror array, the rows of mirrors in the array are staggered. As taught in U.S. Patent Application 08/161,832, "DMD Architecture to Improve Horizontal Resolution," filed December 3, 1993 (Texas Instruments, Inc., docket TI-17405), the effective resolution of an array of pixels may be increased by shifting alternate rows of pixels in the array by one-half of the pixel spacing. Shifted or staggered pixel arrays 110, shown in Figure 6, increase the effective resolution of an array of pixels to about 1.5 times the number of pixels in each row of the array. This feature allows an 864x480 array to have an effective horizontal resolution of about 1296 pixels, enabling the accurate reproduction of 1024 pixel wide-PAL and wide-SECAM images. Because alternate rows of the mirror array are staggered, sampling of the image data for the alternate rows is delayed by one-half pixel in order to align the pixel data samples with the staggered grid. Wide-PAL and wide-SECAM image may be displayed using all 864 pixels in each row, or using only 853 elements, leaving the remaining 11 elements to allow centering the projected image as discussed above. When a staggered pixel array is used, both the proscan conversion and the scaling algorithms must be modified to compensate for the staggered pixel array.

An alternate embodiment is comprised of 576 rows of 864 elements in a staggered grid. This array provides both the horizontal and vertical resolution required by the wide-European television formats while reducing the number of mirrors required. Because a 864x576 array of square elements has an aspect ratio of only 3:2, rectangular elements must be used to maintain the desired 16:9 aspect ratio of the display.

While the principles of the present invention have been demonstrated with particular regard to the structures and methods disclosed herein, it will be recognized that various departures may be undertaken in the practice of the invention. The scope of the invention is not intended to be limited to the particular structures and methods disclosed herein, but should instead be gauged by the breadth of the claims which follow.

## Claims

1. A digital micromirror device for displaying a television image having a predetermined aspect ratio, the digital micromirror device comprising:
a substrate;
an array of rectangular mirror elements suspended over the substrate, each mirror element having a width and a height, wherein the ratio of width to height is approximately said predetermined ratio, the array being comprised of n rows of m mirror elements, wherein the position of the rows of mirror elements are shifted relative to adjacent rows such that each mirror element is positioned between two adjacent mirror elements in an adjacent row;
at least one address electrode formed on the substrate between the substrate and each mirror element;
an array of memory cells formed on the substrate, each memory cell in communication with at least one address electrode; and
an array of input shift registers formed on the substrate and in communication with the memory cells, the input shift registers receiving a series of input image data words and driving the image data to the memory cells.

2. The device of Claim 1, wherein said predetermined aspect ratio is approximately 16:9.

3. The device of Claim 1 or Claim 2, wherein the array of mirror elements is comprised of 576 rows each containing 864 mirrors.

4. The device of Claim 1 or Claim 2, wherein the array of mirror elements is comprised of 480 rows each containing 864 mirrors.

5. The device of any preceding Claim, wherein the mirrors in each row of the array of mirror elements are electrically connected.

6. The device of Claim 5, wherein the rows of mirror elements are electrically connected in 16 separate groups.

7. The device of Claim 6, wherein the rows of mirror elements within each of the 16 groups of mirror elements are interleaved.

8. The device of any preceding Claim, wherein the array of input shift registers is comprised of an array of serial-in parallel-out shift registers.

9. The device of any preceding Claim, further comprising an address decoder in electrical communication with the memory cells, wherein an output from the address decoder enables a portion of the memory cell array to store the image data from the shift register array.

10. The device of Claim 9, wherein each output of the address decoder enables a single row of the memory cell array to store the image data from the shift register array.
